# EUROPEAN PATENT APPLICATION

(11) **EP 4 663 584 A1**
(43) Date of publication of application: **17.12.2025**
(21) Application number: 24899792.6
(22) Date of filing: 03.12.2024
(51) Int. Cl.: B65G 43/08, G01V 5/22

(54) **OBJECT INSPECTION SYSTEM AND OBJECT INSPECTION METHOD**

(30) Priority: 04.12.2023 CN 202311649344
(71) Applicant: Nuctech Company Limited, TongFang Building, Shuangqinglu, Haidian District Beijing 100084 (CN)
(72) Inventor: WANG, Hao, Beijing 100084 (CN); LIN, Weizhi, Beijing 100084 (CN); WANG, Qinchan, Beijing 100084 (CN); YANG, Xu, Beijing 100084 (CN); SUN, Hongbo, Beijing 100084 (CN)
(74) Representative: Isarpatent
(86) International application number: PCT/CN2024/136312
(87) International publication number: WO 2025/119154

(57) **Abstract**

The present disclosure provides an item inspection system, and relates to a field of item inspection, ray scanning, security inspection or another field. The item inspection system includes: a conveying device comprising a first conveying mechanism and a third conveying mechanism configured to convey an item; a ray scanning device comprising a second conveying mechanism configured to convey the item from the first conveying mechanism to a ray scanning region and convey the item to the third conveying mechanism; and a control device communicatively connected with the conveying device and the ray scanning device; wherein the conveying device, the ray scanning device and the control device adopt a unified communication protocol, and the conveying device is configured to control an operation of the second conveying mechanism through the control device. The present disclosure further provides an item inspection method.

## Description

This application claims priority to Chinese Patent Application No. 202311649344.0, filed on December 4, 2023, the entire content of which is incorporated herein in its entirety by reference.

### TECHNICAL FIELD

The present disclosure relates to a field of item inspection, ray scanning, security inspection or another field, and more specifically, to an item inspection system and an item inspection method.

### BACKGROUND

As scales of fields such as logistics, security inspection and express delivery gradually expand, requirements for the item inspection speed is also increased. For example, currently, scanning and inspection of most aviation logistics parcels are done manually. That is, parcels are placed on a security inspection machine manually, the parcels are moved forward in response to pressing the forward key of the security inspection machine, and it is needed to wait for image determination results after scanning the parcels. If the image determination result indicates that a parcel is going to undergo an unpacking and inspection operation, the backward key of the security inspection machine needs to be pressed to rewind all the parcels out of the security inspection machine. Some places have undergone automation retrofit, which is mainly to convey parcels to the security inspection machine for scanning through a conveying device.

During the implementation of the inventive concept of the present disclosure, the inventors found that the related item inspection system includes devices from various manufacturers. For example, the conveying device and the security inspection machine are supplied by different manufacturers, thus it is necessary to increase interconnection interfaces between different systems, which may affect the project cycle and costs, and affect user's expenses indirectly, resulting in cumbersome maintenance and upgrade. In addition, during the inspection process, operations of the conveying device and the security inspection machine may affect each other, which may cause failures in accurately tracking the item and efficiently inspecting the item.

### SUMMARY

The present disclosure provides an item inspection system and an item inspection method.

According an aspect of the embodiments of the present disclosure, an item inspection system is provided. The system includes: a conveying device including a first conveying mechanism and a third conveying mechanism each configured to convey an item; a ray scanning device including a second conveying mechanism configured to convey the item from the first conveying mechanism to a ray scanning region and convey the item to the third conveying mechanism; and a control device communicatively connected with the conveying device and the ray scanning device, where the conveying device, the ray scanning device and the control device adopt a unified communication protocol, and the conveying device is configured to control an operation of the second conveying mechanism through the control device.

According to the embodiments of the present disclosure, the item inspection system further includes: an image determination device communicatively connected with at least the ray scanning device and adopting the unified communication protocol, where the image determination device is configured to acquire a scanned image obtained by scanning the item using the ray scanning device, and obtain an image determination result of the scanned image.

According to the embodiments of the present disclosure, the conveying device is configured to generate a first identifier for the item and send the first identifier to the ray scanning device in response to the item triggering a second trigger mechanism on the ray scanning device, where the second trigger mechanism is arranged between a first ray beam and a second ray beam of the ray scanning device; and the ray scanning device is configured to send the first identifier and the scanned image of the item to the image determination device.

According to the embodiments of the present disclosure, the item inspection system further includes: a recognition device arranged on a path where the first conveying mechanism conveys the item, where the recognition device is communicatively connected with at least the conveying device and adopts the unified communication protocol; and the recognition device is configured to: scan a label of the item passing through a recognition region to generate a second identifier, and send the second identifier to the conveying device, where the second identifier is used for recording the item.

According to the embodiments of the present disclosure, the conveying device is configured to send the first identifier and the second identifier of the item to the ray scanning device; and the ray scanning device is configured to send the first identifier, the second identifier and the scanned image of the item to the image determination device.

According to the embodiments of the present disclosure, the control device is communicatively connected with the recognition device and the image determination device, and the control device is configured to: receive a state information of each of the conveying device, the ray scanning device and the recognition device, and send the state information to the image determination device for processing, where the state information indicates an operating situation of a corresponding device.

According to the embodiments of the present disclosure, the conveying device further includes a sorter connected with the third conveying mechanism, the conveying device is configured to obtain the first identifier and the image determination result of the item, and control the sorter to sort the item based on the first identifier and the image determination result of the item.

According to the embodiments of the present disclosure, the conveying device further includes at least one sorting branch connected with the sorter, the third conveying mechanism is provided with a sixth trigger mechanism, and each sorting branch is provided with a seventh trigger mechanism; and the control device is configured to verify a sorting result based on a time difference between a time instant when the item triggers the sixth trigger mechanism and a time instant when the item triggers the seventh trigger mechanism of a target sorting branch; and the target sorting branch is determined based on the first identifier of the item and the image determination result.

According to the embodiments of the present disclosure, the control device is configured to control the sorter to stop operating when the time difference exceeds a preset threshold.

According to the embodiments of the present disclosure, the sorting branch is configured to convey an item on the sorting branch to a designated position, and the control device is configured to: in response to the item trigging a seventh trigger mechanism of a non-target sorting branch, control the non-target sorting branch to stop operating.

According another aspect of the embodiments of the present disclosure, an item inspection method is provided, applicable to any item inspection system mentioned above. The method includes: conveying, by a conveying device, an item, where the conveying device includes a first conveying mechanism and a third conveying mechanism configured to convey the item; conveying, by a second conveying mechanism in a ray scanning device, the item from the first conveying mechanism to a ray scanning region, and then to the third conveying mechanism; and controlling, by the conveying device through a control device, an operation of the second conveying mechanism, where the control device is communicatively connected with the conveying device and the ray scanning device, and the conveying device, the ray scanning device and the control device adopt a unified communication protocol.

### BRIEF DESCRIPTION OF THE DRAWINGS

The above and other objectives, features and advantages of the present disclosure will be more apparent from the following descriptions of the embodiments of the present disclosure with reference to the accompanying drawings, in which:
FIG. 1 schematically shows a diagram of an application scenario of an item inspection system according to an embodiment of the present disclosure;
FIG. 2 schematically shows a structural diagram of a sorting region according to an embodiment of the present disclosure;
FIG. 3 schematically shows a flowchart of an item inspection method according to an embodiment of the present disclosure;
FIG. 4 schematically shows a diagram of an overall structure of an item inspection system in the related art;
FIG. 5 schematically shows an example of rewinding an item inspection system in the related art;
FIG. 6 schematically shows a partial structural diagram of an item inspection system according to some other embodiments of the present disclosure;
FIG. 7 schematically shows a diagram of an overall structure of an item inspection system according to some other embodiments of the present disclosure;
FIG. 8 schematically shows a flowchart of an item tracking method according to an embodiment of the present disclosure; and
FIG. 9 schematically shows a diagram of logic channels for implementing an item tracking method according to an embodiment of the present disclosure.

Reference signs involved in the above drawings are as follows:
100. Item inspection system; 110. Conveying device; 111. First conveying mechanism; 1111. First trigger mechanism; 112. Third conveying mechanism; 1121. Third trigger mechanism; 1122. Fourth trigger mechanism; 1123. Fifth trigger mechanism; 1124. Sixth trigger mechanism; 113. Sorter; 114. Release branch; 1141. Seventh trigger mechanism A; 115. Unpacking and inspection branch; 1151. Seventh trigger mechanism B; 120. Ray scanning device; 121. Second trigger mechanism; 130. Control device; 140. Recognition device; 150. Image determination device; 200. Item; 201. Baggage.

It will be noted that, for the sake of clarity, in the drawings for describing the embodiments of the present disclosure, a size of an overall/partial structure or an overall/partial region may be enlarged or reduced, that is, these drawings are not drawn to actual scales.

### DETAILED DESCRIPTION OF EMBODIMENTS

Hereinafter, embodiments of the present disclosure will be described with reference to the drawings. However, it will be understood that these descriptions are only exemplary and are not intended to limit the scope of the present disclosure. In the following detailed descriptions, for the convenience of explanation, numerous specific details are set forth to provide a comprehensive understanding of the embodiments of the present disclosure. However, obviously, one or more embodiments may be implemented without these specific details. In addition, in the following, descriptions of well-known structures and technologies are omitted to avoid unnecessary confusion of the concept of the present disclosure.

In order to facilitate the understanding of the technical solutions of the present disclosure, technical terms involved in some embodiments are explained as follows:
XIS: X-ray inspection system;
BHS: Baggage Handling System;
ATR: Automatic Target Recognition; and
BPH: Bags per Hour.

In the related art, manual labor is no longer enough for large-scale inspection requirements in logistics, security inspection, express delivery and other fields. There are solutions to retrofit the system through automatic code scanning, parcel tracking, automatic sorting, centralized image determination and other technical means. However, after the retrofit of the system, although the passing efficiency of item inspection is greatly improved compared with manual manners, there are still many problems. For example, the security inspection machine, the automatic code scanning system, the parcel tracking and sorting system and the centralized image determination system are provided by different manufacturers respectively. Therefore, it is necessary to increase interconnection interfaces between different systems, which may affect the project cycle and costs, and may indirectly affect the user fees. In addition, the impact on maintenance work may lead to tricky situations in terms of defining responsibilities. The impact on later system upgrades may involve an increase in the range of responsible entities and require coordination with multiple relevant entities.

In addition, in the case of insufficient image determination time, abnormal items or abnormal operations of the various devices, the conveying device needs to stop operating. For example, due to limitations on space conditions of airport cargo terminals, in most places, a distance between the security inspection machine and the sorting mechanism arranged downstream thereof is not large enough, which may lead to insufficient image determination time to image recognition personnel. In order to prolong the image determination time for the image recognition personnel, it is necessary to temporarily stop the conveying device, so that the parcel stops in front of the sorter to wait for image determination. The stop of the conveying device will lead to a belt stop of the security inspection machine. If the security inspection machine is performing scanning to generate an image at this time, in order to ensure the integrity of the scanned image, the security inspection machine needs to rewind and perform image splicing. However, data transmission between the conveying device and the security inspection machine may not be performed in time to determine a state of the item. In the entire tracking system of the conveyor line and the security inspection machine, once the disturbance of security inspection machine rewinding is introduced, the success rate of the conveying device in parcel tracking will be affected.

In some embodiments of the present disclosure, an integrated item inspection system is provided, in which a conveying device, a ray scanning device and a control device are communicatively connected with each other using a unified communication protocol, so as to achieve an integrated solution. The conveying device is configured to control an operation of a second conveying mechanism through the control device to achieve a unified conveying control of the item during the inspection process, so that to increase interconnection interface is required between different systems, which may improve the convenience of maintenance and upgrade. In this way, it is possible to avoid mutual interference between the conveying device and the ray scanning device, so that accurate tracking and efficient inspection may be achieved.

For example, in the process of conveying and tracking an item, the start and stop of the second conveying mechanism is controlled by the conveying device. The second conveying mechanism serves as a part of the conveyor line, thus when rewinding is required to perform image splicing, the rewinding is controlled by the conveying device without introducing mutual interference, so that accurate tracking may be achieved, and inspection efficiency and inspection accuracy may be improved.

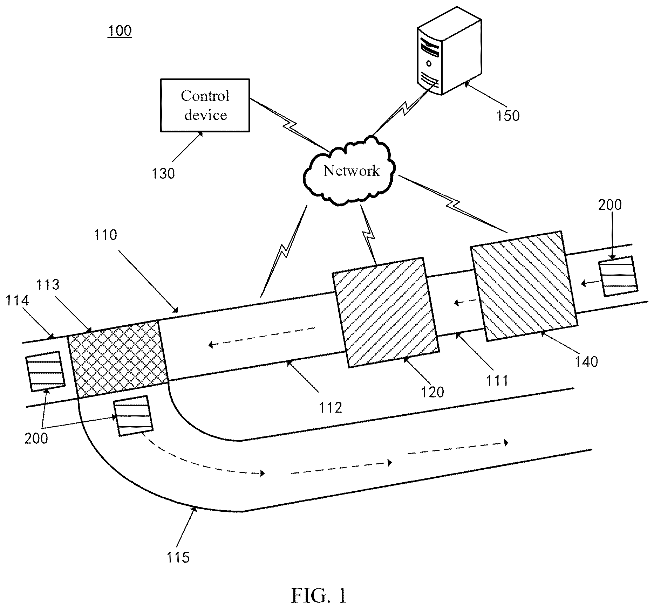

FIG. 1 schematically shows a diagram of an application scenario of an item inspection system according to an embodiment of the present disclosure. It will be noted that FIG. 1 is only an example to which the embodiments of the present disclosure are applicable to help those skilled in the art understand the technical content of the present disclosure, but it does not mean that the embodiments of the present disclosure could not have other devices, systems, or other environments and scenarios.

As shown in FIG. 1, an item inspection system 100 according to the embodiments includes a conveying device 110 and a security inspection machine. The security inspection machine includes a ray scanning device 120 and a control device 130. The conveying device 110 includes a first conveying mechanism 111 and a third conveying mechanism 112, which are both used to convey an item 200. The X-ray scanning device 120 includes a second conveying mechanism (not shown in the figures) configured to convey the item 200 from the first conveying mechanism 111 to an X-ray scanning region (not shown in the figures) and then convey the item 200 to the third conveying mechanism 112. The control device 130 is communicatively connected with the conveying device 110 and the ray scanning device 120. The conveying device 110, the ray scanning device 120 and the control device 130 adopt a unified communication protocol, and the conveying device 110 is configured to control an operation of the second conveying mechanism through the control device 130.

For example, any one of the first conveying mechanism 111, the second conveying mechanism or the third conveying mechanism 112 may be implemented in the form of a conveyor belt, a convey roller or a track. For example, the conveying roller may include an electric roller and a plurality of driven rollers, the electric roller may be driven by a servo motor, and the rollers may be connected to each other through belts. The first conveying mechanism 111, the second conveying mechanism and the third conveying mechanism 112 may all be used to convey the item 200 to be inspected and/or a tray. As shown in FIG. 1, the item 200 may be moved along the dotted arrow from an entry of the first conveying mechanism 111 to a sorter 113 through the ray scanning device 120, and then be sorted to a respective one of sorting branches.

Exemplarily, the security inspection machine may include a control device 130, a housing, a ray scanning device 120 and a second conveying mechanism. The housing of the security inspection machine forms an accommodation space for mounting and protecting various functional components therein. An inspection channel is arranged inside the housing of the security inspection machine, and a second conveying mechanism, such as a belt conveyor, is arranged in the inspection channel. Two ends of the housing of the security inspection machine are respectively provided with a security inspection entry and a security inspection exit which are in communication with two ends of the second conveying mechanism respectively. The ray scanning device 120 is arranged inside the inspection channel, and is used to image the item 200 to be inspected in a ray scanning region by emitting X-ray beams.

For example, the ray scanning device 120 may include one or more ray sources used for generating X-ray beams. The ray scanning device 120 may further include a detector. The ray source emits rays towards the item 200, and the detector detects rays that interacted with the item 200, thereby achieving the inspection of the item 200. For example, an X-ray source emits rays towards the conveyed item 200 in the inspection channel, and the detector detects rays transmitted through the item 200 to obtain a scanned image. For another example, a plurality of ray sources emit X-rays towards the item 200 from a plurality of angles in a time-sharing manner, the rays transmitted through the item 200 are detected each time, and a scanned image of the item 200 is formed by processing the detection signals.

In some embodiments, the control device 130 may be implemented by a PLC (Programmable Logic Controller). The control device 130 is communicatively connected with the conveying device 110 and the ray scanning device 120 through a network. The medium used to provide a communication link in the network may include various connection types, such as a wired connection, a wireless communication link or an optical fiber cable. A PPI (Programmable Pulse Interface) communication protocol, an MPI (Multipoint Interface) communication protocol or a profinet communication protocol may be used as the unified communication protocol. The programmable controller includes functional units, such as a CPU, instructions and data memory, an input/output interface, a power supply, and a digital-analog converter, which has a powerful logic operation function and may adapt to industrial control environment well. In some other embodiments, a microprocessor, a computer or a server may be used as the control device 130.

In some embodiments, the control device 130 may send control instructions to the conveying device 110 and the ray scanning device 120 to control, for example, the start-stop, the convey speed, and the ray emission and reception of each conveying mechanism. For example, several trigger mechanisms, such as light barriers, may be provided on the conveying device 110 and the ray scanning device 120 to track the item 200. After the item 200 reaches the light barrier, a photoelectric through-beam sensor in the light barrier is activated and a trigger signal is sent to the control device 130. After receiving the trigger signal corresponding to the light barrier, the control device 130 logs a position currently reached by the item 200. It will be noted that the trigger signal may be directly or indirectly sent to the control device 130. In the case of indirectly sending the trigger signal, the trigger signal is first collected by a control module on the conveying device 110 and then is sent to the control device 130 by the control module.

Exemplarily, the item 200 may include a vehicle, a container, a baggage 201 or other articles in security inspection scenarios, such as various materials in material analysis scenarios.

In the related art, in a practical automation retrofit of a cargo terminal, disagreements often arise between the security inspection machine manufacturer and conveyor line manufacturer regarding whether the security inspection machine performs rewinding for image splicing. The security inspection machine manufacturer prioritizes the integrity of a scanned image of the parcel, requiring the security inspection machine to stop and perform rewinding for image splicing. The conveyor line manufacturer prioritizes the tracking stability of the parcel and advocates avoidance of rewinding the security inspection machine. This conflict remains largely irreconcilable. The current prevailing field solution is that: the rewinding of the security inspection machine for image splicing is disabled, and when there is an incomplete image caused by a belt stop, an unpacking and inspection operation is performed. However, this is not a perfect solution. For a place with limited space conditions, frequent belt stops are required, which may cause a certain percentage of parcels transferred to the unpacking and inspection side.

In some embodiments, for example, the conveying device 110 may send a control request to the control device 130 to control operations of the second conveying mechanism, including starting, stopping, acceleration, deceleration, etc. In this way, centralized control of the conveying device 110 and the conveying mechanism of the security inspection machine (i.e., the second conveying mechanism) may be achieved through the integrated design, coordinating their conveying operations for the item 200, thereby reducing pause and delay during the transfer of the item 200 between the two. Regarding the tracking of the item 200, the integrated design enables continuous positioning of the item 200, so that the conveying path of the item 200 and the speed at which the item 200 is conveyed may be accurately controlled, and position misdetermination may be reduced.

According to the embodiments of the present disclosure, an integrated item inspection system 100 is provided. The conveying device 110, the X-ray scanning device 120 and the control device 130 are communicatively connected with each other and adopt a unified communication protocol, so as to achieve an integrated solution. In addition, the conveying device 110 is configured to control the operation of the second conveying mechanism through the control device 130, so as to achieve a unified conveying control of the item 200 during the inspection process, so that no interconnection interface is required between different systems, which may improve the convenience of maintenance and upgrade. In this way, mutual interference between the conveying device 110 and the ray scanning device 120 may be avoided, thereby achieving precise tracking and efficient inspection.

In some embodiments, the item inspection system 100 further includes an image determination device 150 communicatively connected with at least the ray scanning device 120 and adopting the unified communication protocol, and the image determination device 150 is configured to: acquire a scanned image obtained by scanning the item 200 using the ray scanning device 120, and obtain an image determination result of the scanned image.

For example, during security inspection in public places such as highways, railway stations and airports, the X-ray scanning device 120 obtains a scanned image of the baggage 201 in the X-ray scanning region. Then, the scanned image may be directly sent to the image determination device 150 by the ray scanning device 120, or the scanned image may be obtained by the control device 130 and then be sent to the image determination device 150. Then, the scanned image may be assigned, by the image determination device 150, to a security inspector for image recognition. Image recognition personnel analyze the X-ray image based on the X-ray image and personal experience, and give a determination result. The image determination device 150 may also call an automatic image recognition system to recognize the scanned image and automatically obtain an image determination result. The determination result includes whether contraband is contained. The image determination device 150 may display a scanned image information and the image determination result.

According to the embodiments of the present disclosure, the image determination device 150, the control device 130, the conveying device 110 and the ray scanning device 120 adopt the unified communication protocol, so that it is possible to achieve a unified interface and protocol standardization among the various devices, which may reduce communication compatibility problems between the devices, thereby improving the speed at which the image determination device 150 obtains information as well as the integrity of the obtained information.

In some embodiments, the item inspection system 100 further includes a recognition device 140 arranged on a path where the first conveying mechanism 111 conveys the item 200, and the recognition device is communicatively connected with at least the conveying device 110 and adopts the unified communication protocol. The recognition device 140 is configured to: scan a label of the item 200 passing through a recognition region to generate a second identifier, and send the second identifier to the conveying device 110, where the second identifier is used to record the item 200.

For example, the item 200 is affixed with a barcode label or a QR code label, and the recognition device 140 may generate the second identifier by scanning the label, and then send the second identifier to the conveying device 110 for tracking and recording the recognized item. The second identifier may be directly sent to the conveying device 110. Or, the second identifier may be sent to the control device 130, and the control device 130 records the recognized item, performs data processing based on the second identifier, and generates corresponding control instructions to the conveying device 110.

In some embodiments, the conveying device 110 is configured to: generate a first identifier for the item 200, and send the first identifier to the ray scanning device 120 in response to the item 200 triggering a second trigger mechanism 121 on the ray scanning device 120. The second trigger mechanism 121 is arranged between a first ray beam and a second ray beam of the ray scanning device 120. The ray scanning device 120 is configured to send the first identifier and the scanned image of the item 200 to the image determination device 150.

For example, the second trigger mechanism 121 includes a photoelectric through-beam sensor with an emitting end and a receiving end, where the emitting terminal emits red light or infrared light, and the receiving terminal receives the red light or the infrared light, and when the item 200 passes through, the item 200 interrupts the red light beam or the infrared light beam. In this embodiment, the X-ray scanning device 120 may directly send the first identifier and the scanned image of the item 200 to the image determination device 150. Or, the control device 130 may receive the first identifier instead of the X-ray scanning device 120, and when the control device 130 obtains the scanned image, it sends the scanned image together with the first identifier to the image determination device 150. The first identifier is used for the item inspection system 100 itself, for example, for the conveying device 110 or the control device 130, to track the item 200. The second identifier is used for recording the tracking state and the conveying state of the item 200 in the inspection site.

According to the embodiments of the present disclosure, the position of the second trigger mechanism 121 is selected, so that it is possible to enable the conveying device 110 and the ray scanning device 120 to communicate with each other, thereby avoiding tracking inaccuracies during rewinding.

In some embodiments, the conveying device 110 is configured to: after the second identifier sent by the recognition device 140 is received, send the first identifier and the second identifier of the item 200 to the ray scanning device 120. The ray scanning device 120 is configured to send the first identifier, the second identifier and the scanned image of the item 200 to the image determination device 150. In this way, the image determination device 150 may obtain and display complete information of the item 200.

In some embodiments, the conveying device 110 further includes a sorter 113 connected with the third conveying mechanism 112. The conveying device 110 is configured to obtain the first identifier and the image determination result of the item 200, and control the sorter 113 to sort the item 200 based on the first identifier and the image determination result of the item 200.

For example, the third conveying mechanism 112 is provided with a trigger mechanism for tracking items, and when the item 200 reaches the sorter 113, the image determination device 150 sent data to the control device 130, and the control device 130 generates sorting control instructions based on the first identifier and the image determination result of the item 200 and sends the instructions to the conveying device 110, so as to drive the sorter 113 to perform a corresponding sorting operation.

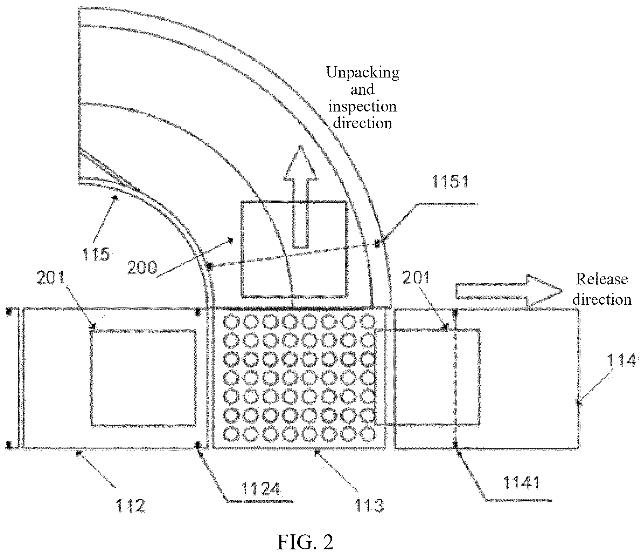

FIG. 2 schematically shows a structural diagram of a sorting region according to an embodiment of the present disclosure.

In some embodiments, the conveying device 110 further includes at least one sorting branch connected with the sorter 113, the third conveying mechanism 112 is provided with a sixth trigger mechanism 1124, and each sorting branch is provided with a seventh trigger mechanism. The control device 130 is configured to verify the sorting result based on a time difference between a time instant when the item 200 triggers the sixth trigger mechanism and a time instant when the item 200 triggers the seventh trigger mechanism of a target sorting branch, and the target sorting branch is determined based on the first identifier of the item 200 and the image determination result.

Referring to FIG. 1 and FIG. 2, the item 200 is conveyed from the third conveying mechanism 112 to the sorter 113, and the sorter 113 performs sorting based on the instructions from the control device 130. If the item 200 is a safe item, it directly proceeds to a release branch 114; and if the item 200 is a suspicious item, it is conveyed to an unpacking and inspection branch 115 after the sorting and is further conveyed for subsequent unpacking and inspection on the suspicious item 200.

For example, during the inspection of baggage 201, after the baggage 201 triggers a light barrier in the sixth trigger mechanism 1124, the control device 130 starts a corresponding timer based on the first identifier and the second identifier of the baggage 201. If the target sorting branch is the release branch 114, the timer is stopped when the baggage 201 triggers the seventh trigger mechanism A-1141 thereon.

In some embodiments, the control device 130 is configured to control the sorter 113 to stop operating when the time difference exceeds a preset threshold.

For example, during the sorting of the baggage 201 by the machine 113, if situations such as jamming of the luggage 201, operational halt, or sorting errors occur, the baggage 201 is prevented from reaching the target sorting branch after a long time, thus the time difference will exceed the preset threshold (such as 30 seconds, for illustration only). In this case, the sorter 113 is stopped immediately to investigate the cause.

In some embodiments, the sorting branch is configured to convey the item 200 thereon to a designated position, and the control device 130 is configured to: in response to the item 200 triggering the seventh trigger mechanism of a non-target sorting branch, control the non-target sorting branch to stop operating.

For example, if the target sorting branch of the baggage 201 is the release branch 114, but the baggage 201 is sorted to the unpacking and inspection branch 115, the seventh trigger mechanism B-1151 of the unpacking and inspection branch 115 is triggered. No matter whether the time difference is within the preset threshold, the conveying of the baggage 201 by the unpacking and inspection branch 115 is stopped, so as to correct the error in time. In addition, the operation of the sorter 113 may be stopped at the same time to avoid item accumulation.

Taking an airport as an example, when a parcel passes the sorter 113, the sorter 113 dispatches the parcel to the unpacking and inspection branch 115 based on the instructions. If an abnormal parcel dispatching occurs in the sorter 113, the parcel to be unpacked and inspected may be misdispatched to the release branch 114, which may lead to a serious security problem in an airport cargo system.

According to the embodiments of the present disclosure, two verification processes are provided before and after parcel sorting so as to ensure that the parcel proceeds to the correct branch. Referring to FIG. 2, the parcel entering the sorter 113 is continuously tracked. Based on the information from light barriers at the release direction and inspection direction, it is determined whether the parcel enters a corresponding inspection branch or a corresponding release branch 114. If the parcel to be unpacked and inspected enters the release branch 114, the system is immediately stopped and triggers an alarm to prompt the security personnel for corresponding actions.

In combination with the above embodiments and FIGS. 1 and 2, the embodiments of various devices in the item inspection system 100 and the item inspection process will be further described.

In some embodiments, referring to FIG. 1, the conveying device 110 may be a BHS (Baggage Handling System). The first conveying mechanism 111 serving as entry BHS may include two 1-meter conveyor belt sections. The conveyor belts may achieve a parcel gapping function to maintain the parcel spacing to a system-required parcel spacing. For example, the parcel spacing is 0.5 meters. Specifically, after the light barrier detects that an item 200 has been sent out, the release of the next item 200 is delayed for a certain period of time, so as to achieve the parcel gapping.

The recognition device 140 may include an ATR automatic code scanning system, which is arranged upstream of the XIS (X-ray inspection system), employs the AliS system of SICK (five-sided scanning), and is mounted astride the entry conveyor belt. A barcode information (i.e., the second identifier) of the parcel may be obtained, and the barcode information may be transmitted through a BHS interface in response to a request of the XIS (the ray scanning device 120). The BHS directly or indirectly (e.g., through the control device 130) receives the parcel barcode information from the ATR automatic code scanning system, tracks the parcel, and sends the barcode information to the XIS at a fixed position (the position of the second trigger mechanism 121), thereby facilitating association of the parcel image with the parcel barcode information by the XIS.

The XIS conveys and scans the parcel, sends the X-ray image and the parcel barcode information to a remote image determination system through a network, and feeds back the parcel barcode information and the image determination result to the BHS interface.

The image determination device 150 may include a local image determination system or a remote image determination system interconnected with the XIS through a network, so as to achieve functions such as X-ray image distribution and storage, and remote image determination.

The third conveying mechanism 112 serves as exit BHS and is arranged downstream of the XIS. The third conveying mechanism 112 includes several conveyor belt sections (customized according to the site requirements), a 1-meter sorter 113, a turning conveyor belt section and a recirculation belt (for illustration only). The third conveying mechanism may receive parcels from the XIS, and release and sort them based on the image determination result. Parcels for release and parcels to be unpacked and inspected are continuously tracked, so as to ensure that they proceed to corresponding branches.

In some embodiments, the control device 130 is communicatively connected with the recognition device 140 and the image determination device 150, and the control device 130 is configured to: receive a state information of each of the conveying device 110, the ray scanning device 120 and the recognition device 140, and send the state information to the image determination device 150 for processing, where the state information indicates an operating situation of a corresponding device.

Exemplarily, the conveyor line (including the first conveying mechanism 111, the sorter 113, the third conveying mechanism 112 and the sorting branches), the security inspection machine and the image determination device 150 are in deep data interaction with one another. The display interface of the image determination device 150 may display information such as a security inspection machine state, a parcel tracking state, a parcel sorting state and a state of the sorter 113. For example, security inspection inquiry and apparatus management may be performed through the display interface of the image determination device 150, and information of one or more fields, such as waybill number, scanned image, current position, image determination result, image determination time, sorting result, abnormal sorting processing outcome and sorting state of each baggage 201 may be displayed.

According to the embodiments of the present disclosure, the conveyor system, the security inspection machine and the image determination device 150 share information, so that the image determination device 150 may obtain comprehensive information of the item inspection system 100 and the item 200, which may enable accurate image analysis and device management.

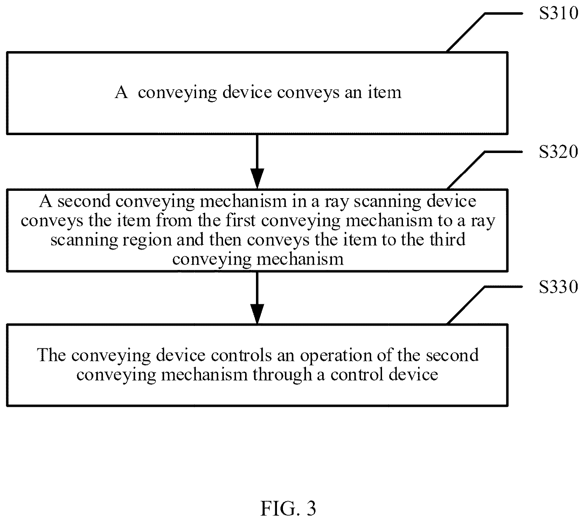

Based on the above-mentioned item inspection system 100, some embodiments of the present disclosure further provide an item inspection method. FIG. 3 schematically shows a flowchart of an item inspection method according to an embodiment of the present disclosure.

In operation S310, a conveying device 110 conveys an item 200, where the conveying device 110 includes a first conveying mechanism 111 and a third conveying mechanism 112 each configured to convey the item 200.

In operation S320, a second conveying mechanism in a ray scanning device 120 conveys the item 200 from the first conveying mechanism 111 to a ray scanning region and then conveys the item 200 to the third conveying mechanism 112.

In operation S330, the conveying device 110 controls an operation of the second conveying mechanism through a control device 130, where the control device 130 is communicatively connected with the conveying device 110 and the ray scanning device 120, and the conveying device 110, the ray scanning device 120 and the control device 130 adopt a unified communication protocol.

In some embodiments, the image determination device 150 acquires a scanned image obtained by scanning the item 200 using the ray scanning device 120, and obtains an image determination result of the scanned image. The image determination device 150 is communicatively connected with at least the ray scanning device 120 and adopts the unified communication protocol.

In some embodiments, the conveying device 110 generates a first identifier for the item 200, and sends the first identifier to the ray scanning device 120 in response to the item 200 triggering the second trigger mechanism 121 on the ray scanning device 120, where the second trigger mechanism 121 is arranged between a first ray beam and a second ray beam of the ray scanning device 120. The ray scanning device 120 sends the first identifier and the scanned image of the item 200 to the image determination device 150.

In some embodiments, the recognition device 140 scans a label of the item 200 passing through a recognition region to generate a second identifier and sends the second identifier the conveying device 110, where the second identifier is used for recording the item 200. The recognition device 140 is arranged on a path where the first conveying mechanism 111 conveys the item 200, and the recognition device is communicatively connected with at least the conveying device 110 and adopts the unified communication protocol.

In some embodiments, the conveying device 110 sends the first identifier and the second identifier of the item 200 to the ray scanning device 120, and the ray scanning device 120 sends the first identifier, the second identifier and the scanned image of the item 200 to the image determination device 150.

In some embodiments, the control device 130 is communicatively connected with the recognition device 140 and the image determination device 150, and the control device 130 receives a state information of each of the conveying device 110, the ray scanning device 120 and the recognition device 140, and sends the state information to the image determination device 150 for processing, where the state information indicates an operating situation of a corresponding device.

In some embodiments, the conveying device 110 further includes a sorter 113 connected with the third conveying mechanism 112. The conveying device 110 obtains the first identifier and the image determination result of the item 200, and controls the sorter 113 to sort the item 200 based on the first identifier and the image determination result of the item 200.

In some embodiments, the conveying device 110 further includes at least one sorting branch connected with the sorter 113. The third conveying mechanism 112 is provided with a sixth trigger mechanism 1124, and each sorting branch is provided with a seventh trigger mechanism. The control device 130 verifies the sorting result based on a time difference between a time instant when the item 200 triggers the sixth trigger mechanism 1124 and a time instant when the item triggers the seventh trigger mechanism of a target sorting branch, and the target sorting branch is determined based on the first identifier and the image determination result of the item 200.

In some embodiments, the control device 130 controls the sorter 113 to stop operating when the time difference exceeds a preset threshold.

In some embodiments, the sorting branch conveys the item 200 thereon to a designated position, and in response to the item 200 trigging a seventh trigger mechanism of a non-target sorting branch, the control device 130 controls the non-target sorting branch to stop operating.

Referring to FIG. 1 to FIG. 3, some embodiments of improving the accuracy of item tracking are described in detail below.

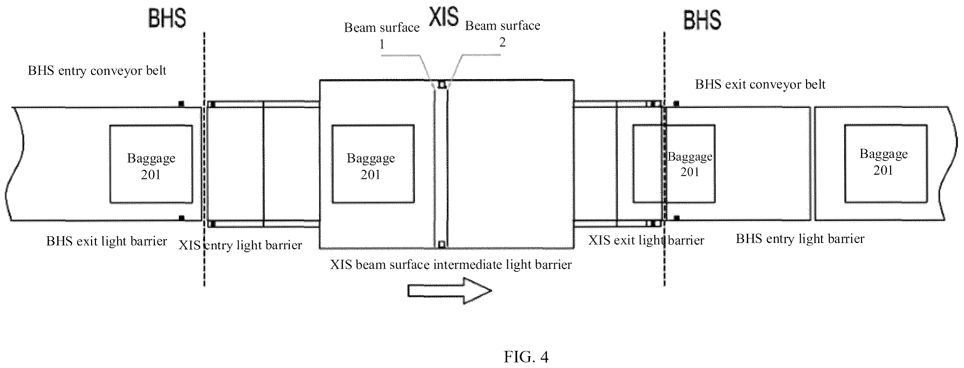

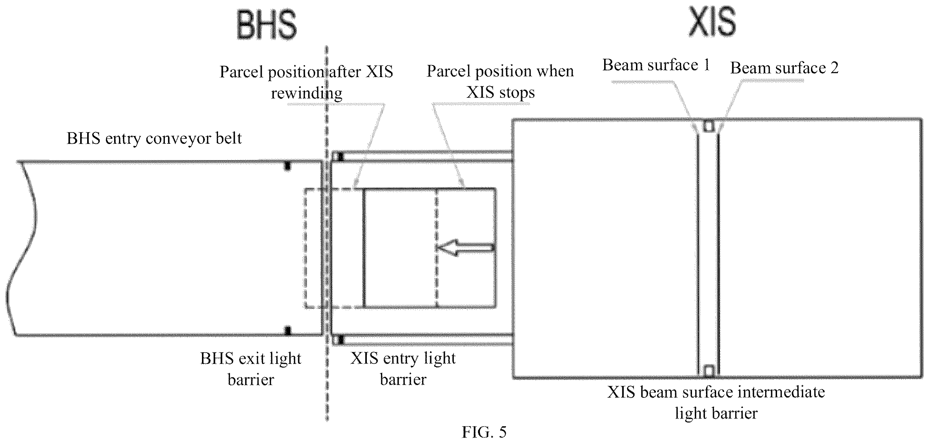

FIG. 4 schematically shows a diagram of an overall structure of an item inspection system in the related art. FIG. 5 schematically shows an example of rewinding an item inspection system in the related art.

As shown in FIG. 4 and FIG. 5, the BHS tracks the baggage 201 to an XIS entry, and at the light barrier at the XIS entry, the BHS sends the ID information of the baggage 201 to the XIS. After the baggage 201 is conveyed to the XIS, the XIS starts to track the baggage 201. When a scanned image of the baggage 201 is generated, the XIS associates the ID of the baggage 201 with the scanned image and sends them to an image determination system. When the baggage 201 leaves the XIS, the XIS sends the ID of the baggage 201 back to the BHS, the BHS continues to track the baggage 201 until it reaches the sorting port, and a corresponding unpacking and inspection operation or a release operation is performed.

In practical application, the XIS stops and then rewinds for a distance approximately 10 cm to 25 cm (the rewinding distance varies as the XIS speed varies). In the whole tracking system of BHS and XIS, the introduction of a rewinding of the XIS will affect the success rate of the BHS in tracking the baggage 201.

If the BHS and the XIS are from two different manufacturers, they interact with each other through entries and exits, which may meet the system requirements during normal use processes. However, if there is disturbance of XIS rewinding for image splicing, the failure probability of tracking the baggage 201 may be increased. The reason is that the baggage 201 may falsely trigger the entry/exit light barrier of the XIS or the entry/exit light barrier of the conveyor line during the rewinding. The baggage 201 that has passed the entry light barrier may re-trigger the entry light barrier of the XIS or the exit light barrier of the BHS. Likewise, false triggering may also occur at exit light barrier of the XIS and the entry light barrier of the BHS. These four light barriers serve as critical determination elements in the tracking process of the baggage 201, and if the four light barriers are falsely re-triggered, the tracking success rate may be reduced.

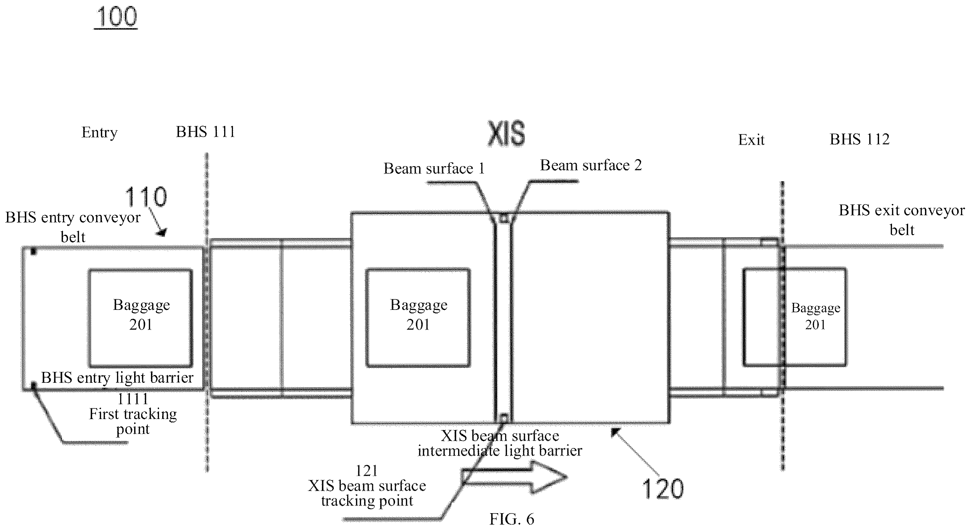

Based on the problems pointed out in FIG. 4 and FIG. 5, the present disclosure provides an item inspection system 100 and an item tracking method, which are further described below in conjunction with FIG. 6 to FIG. 9.

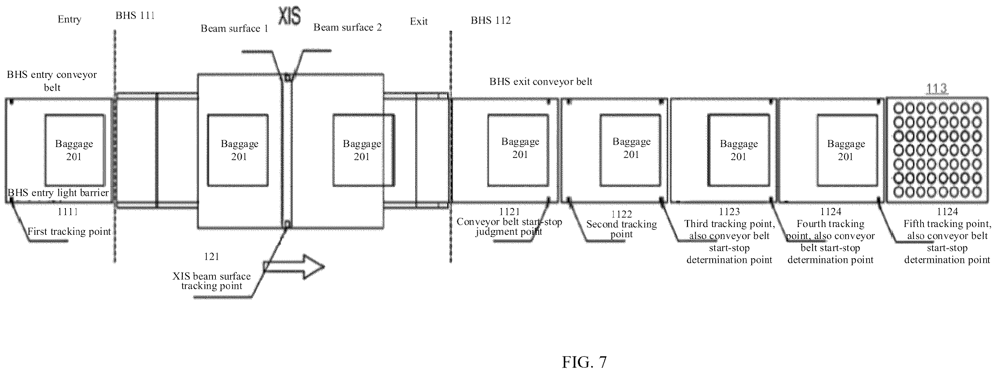

FIG. 6 schematically shows a partial structural diagram of an item inspection system 100 according to some other embodiments of the present disclosure. FIG. 7 schematically shows a diagram of an overall structure of an item inspection system 100 according to some other embodiments of the present disclosure.

In some embodiments, referring to FIG. 6 and FIG. 7, the item inspection system 100 includes a conveying device 110 (i.e., the BHS) and a ray scanning device 120 (i.e., the XIS). The conveying device 110 includes a first conveying mechanism 111 (such as the BHS entry conveyor belt) used to convey an item 200 (such as baggage 201). The first conveying mechanism 111 is provided with a first trigger mechanism 1111 (i.e. a BHS entry light barrier) used to track the item 200. The X-ray scanning device 120 includes a second conveying mechanism used to convey the item 200 from the first conveying mechanism 111 to a ray scanning region and rewind for a certain distance after the conveying of the item 200 is stopped. The first trigger mechanism 1111 is spaced apart from the entry of the ray scanning device 120 by a first distance, and the first distance is greater than a travelling distance of any item 200 thereon during a rewinding process of the second conveying mechanism.

When the item 200 passes a first tracking point, the BHS may generate a first identifier, and the first identifier is associated with the item 200 to achieve subsequent tracking. The first tracking point is a tracking point closest to the XIS entry, and since it is spaced from the XIS entry by a first distance, any item 200 reversely conveyed during the rewinding process will not re-trigger the first trigger mechanism 1111, so that a repeated tracking record of the item 200 generated by false triggering may be eliminated.

Referring to FIG. 6 and FIG. 7, compared to the related art shown in FIG. 1 and FIG. 2, the first trigger mechanism 1111 is further away from the XIS entry. For example, the rewinding distance is approximately 10 cm to 25 cm, the length of a largest baggage 201 is approximately 1 meter, and the first trigger mechanism 1111 is approximately more than 1 meter away from an edge of the XIS entry. In this case, arranging the first tracking point at this position may avoid false triggering during the rewinding of the XIS.

It may be understood that, in this embodiment, rewinding the second conveying mechanism for a certain distance after the conveying of the item 200 is stopped corresponds to a temporary belt stop during the item inspection process, rather than the situation that the entire item inspection system 100 stops operating to end the inspection of the items 200.

According to the embodiments of the present disclosure, an item inspection system 100 including a conveying device 110 and a ray scanning device 120 is provided. The first trigger mechanism 1111 of the first conveying mechanism 111 originally arranged in the conveying device 110 is arranged at a position spaced from the entry of the ray scanning device 120 by a first distance, so that even when the second conveying mechanism preforms rewinding for image splicing, during the reverse operation of the second conveying mechanism, since the first distance is larger than a travelling distance of any item 200 on the second conveying mechanism, it is possible to avoid falsely triggering the first trigger mechanism 1111, thereby achieving accurate tracking and efficient inspection.

In some embodiments, the ray scanning device 120 is provided with a second trigger mechanism 121 (i.e., an XIS beam surface intermediate light barrier) only, where the second trigger mechanism 121 is arranged between a first beam surface (i.e., the beam surface 1) and a second beam surface (i.e., the beam surface 2) of the ray scanning device 120, and the second trigger mechanism 121 is used to track the item 200.

Exemplarily, the XIS includes a first beam surface formed by a combination of a first ray source and a first ray detector, and a second beam surface formed by a combination of a second ray source and a second ray detector, where the beam surface 1 and the beam surface 2 are parallel. In this way, mutual interference of ray signals is avoided, and inspection of the item 200 to be inspected in various manners and at various angles is achieved.

According to the embodiments of the present disclosure, an XIS beam surface tracking point is provided at the position of the second trigger mechanism 121, and the XIS entry light barrier is cancelled, so that it is possible to overcome the problem that the XIS entry light barrier is falsely triggered during the reverse operation in the related art. The BHS and the XIS transmit the first identifier when the item 200 passes through the XIS beam surface tracking point, and then the tracking may be achieved by combining the first identifier and the scanned image. That is, by using the information of light barrier and scanned image, even if the second trigger mechanism 121 is re-triggered during the rewinding, the disturbance of false triggering in the tracking process may be filtered out because the scanned image is already obtained.

In some embodiments, the conveying device 110 includes a third conveying mechanism 112 used to convey the item 200 from the second conveying mechanism. The third conveying mechanism 112 includes N convey sub-mechanisms, such as N conveyor belts. Each convey sub-mechanism is configured to convey the item 200 to a next convey sub-mechanism until the item 200 leaves the third conveying mechanism 112. The first convey sub-mechanism closest to the ray scanning device 120 is configured to operate synchronously with the second conveying mechanism.

Referring to FIG. 7, the N convey sub-mechanisms may be N conveyor belts, such as a BHS exit conveyor belt and all conveyor belts between the BHS exit conveyor belt and the sorter 113. The first convey sub-mechanism is the BHS exit conveyor belt. Synchronous operation shows that the XIS conveyor belt (i.e., the second conveying mechanism) serves as a part of the conveyor system, which is convenient for the BHS to track the item 200 on each conveyor belt section.

In some embodiments, the first convey sub-mechanism is provided with a third trigger mechanism 1121 used to send out a start-stop signal in response to that the third trigger mechanism 1121 is triggered by the item 200 and a specific condition is met. The first convey sub-mechanism is configured to stop or operate based on a start-stop signal. The specific condition mentioned above in the present disclosure is, for example, that if a next convey sub-mechanism operates, a start signal is sent out, and if the next convey sub-mechanism stops operating, a stop signal is sent out.

In some embodiments, the third trigger mechanism 1121 is arranged at a terminus of a conveying path provided by the first convey sub-mechanism.

Referring to FIG. 7, a start-stop determination point is provided at a terminus position of the third trigger mechanism 1121. When the first convey sub-mechanism stops or operates based on the start-stop signal, the second conveying mechanism synchronously stops or operates. The third trigger mechanism 1121 is a trigger mechanism on the BHS closest to the edge of the XIS exit, spaced by a second distance (for example, approximately 1 meter). The third trigger mechanism 1121 is arranged at a terminus of the BHS exit conveyor belt, so that false triggering caused by the rewinding of the XIS may be avoided.

In some embodiments, the second convey sub-mechanism is a next convey sub-mechanism adjacent to the first convey sub-mechanism, and the second convey sub-mechanism is provided with a fourth trigger mechanism 1122 used to track the item 200.

In some embodiments, the second convey sub-mechanism is provided with a fifth trigger mechanism 1123. The fifth trigger mechanism 1123 is arranged farther away from the first convey sub-mechanism than the fourth trigger mechanism 1122, and the fifth trigger mechanism 1123 is used to track the item 200 and send out a start-stop signal in response to that the fifth trigger mechanism 1123 is triggered by the item 200 and a specific condition is met. Referring to FIG. 7, a second tracking point is provided at the fourth trigger mechanism 1122. A third tracking point is provided at the fifth trigger mechanism 1123.

In some embodiments, the fourth trigger mechanism 1122 is located at the beginning of a conveying path provided by the second convey sub-mechanism, and the fifth trigger mechanism 1123 is located at a terminus of the conveying path provided by the second convey sub-mechanism. The conveying path includes a path where each independent conveyor belt conveys items, such as a rectangular region corresponding to each conveyor belt shown in FIG. 7.

According to the embodiments of the present disclosure, the tracking point and the start-stop point on the XIS exit side are properly selected, and the start-stop light barrier and the tracking light barrier on the XIS exit side are separately selected. On the BHS exit conveyor belt closest to the XIS, the third trigger mechanism 1121 is used only as a start- stop determination point of the conveyor belt, rather than a tracking point. Such configuration has the following advantages.

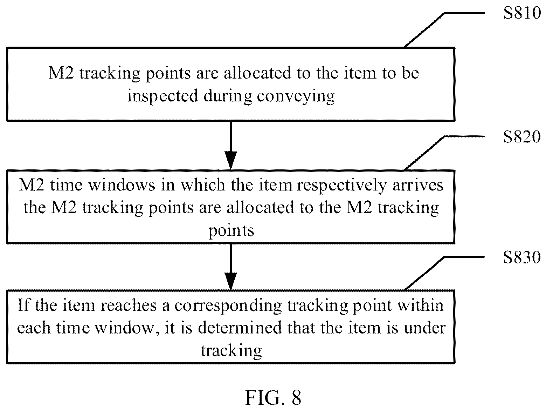

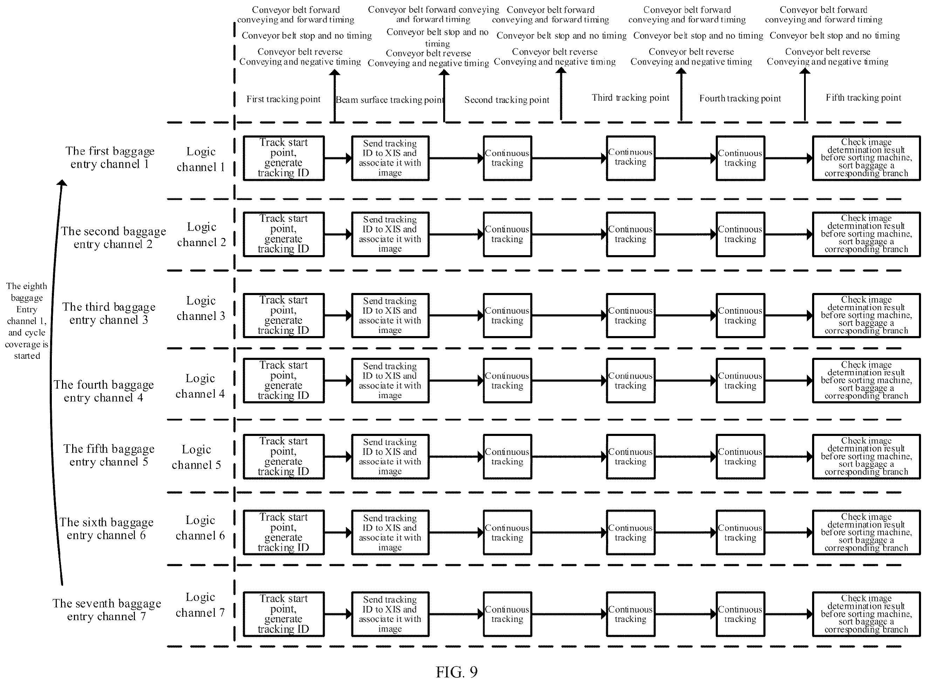

The BHS exit conveyor belt (i.e. the first convey sub-mechanism) and the XIS conveyor belt (i.e. the second conveying mechanism) start and stop synchronously. When the baggage 201 triggers the light barrier at the terminus of the conveyor belt, if the next belt section stops, this belt section and the XIS conveyor belt also stop at the same time. If a rewinding of the XIS is required for image splicing, this belt section also rewinds synchronously with XIS conveyor belt. Since this light barrier is not used as a tracking point, even if the conveyor belt is started after the rewinding, and the baggage 201 re-triggers the light barrier, this will not affect the tracking of the baggage 201. The exit conveyor belt and the XIS start and stop synchronously, which may facilitate an accurate calculation of the time window (referring to FIG. 8 and FIG. 9), so that the tracking of the baggage 201 may be more accurate.

An entry light barrier of a next belt section (i.e. the second convey sub-mechanism) of the BHS exit conveyor belt is selected as the tracking point (see the second tracking point in FIG. 7) may eliminate the influence of the XIS rewinding. The system is designed such that belts are stopped section by section from the sorting port, through logic processing, the BHS exit conveyor belt continues to convey the baggage 201 to a next belt section, and the next belt section continues to convey the baggage 201 until the baggage 201 enters the sorter 113. Therefore, when the baggage 201 is conveyed from the BHS exit conveyor belt to the next belt section and passes the second tracking point, a belt stop will not occur in the system.

In some embodiments, each of the rest of the N convey sub-mechanisms other than the first convey sub-mechanism and the second convey sub-mechanism is provided with at least one sixth trigger mechanism 1124, and the sixth trigger mechanism 1124 is used to track the item 200 and send out a start-stop signal in response to that the sixth trigger mechanism 1124 is triggered by the item 200 and a specific condition is met.

In some embodiments, each of the rest of the N convey sub-mechanisms other than the first convey sub-mechanism and the second convey sub-mechanism is provided with the sixth trigger mechanism 1124 at least at the terminus of the conveying path.

According to the embodiments of the present disclosure, referring to FIG. 7, four 1-meter (for illustration only) conveyor belts are arranged downstream of the XIS. Except that only for the BHS exit conveyor belt closest to the XIS, the light barrier is selected as the start-stop determination point of the conveyor belt rather than the tracking point, a terminus of each of the remaining conveyor belt sections is mounted with a light barrier as a trigger mechanism, and the light barrier is usually used as a tracking point as well as a start-stop determination point of the conveyor belt (that is, when the baggage 201 triggers the light barrier, a state of the next belt is inquired, and if the next belt stops, the conveyor belt where the baggage 201 is located will also stop immediately). This is convenient for an accurate calculation of the time window, so that the tracking of the baggage 201 may be more accurate.

It will be noted that the above parameters of four sections and 1-meter are only for the convenience of clear description, and the item inspection system 100 may be modularized, where depending on different budgets and usage needs of the user, different module configurations may be selected. For example, the ATR automatic code scanning system may employ a high-cost three-sided code scanning camera, where the system performs automatic code scanning and has a high pass rate of the baggage 201, and the BPH thereof is approximately 800 pieces per hour. Alternatively, a low-cost code scanning gun may be employed, where the system adopts manual code scanning and has a low pass rate, and the BPH is approximately 360 pieces per hour. For example, BHS with different configurations may be employed, for example, a multi-section conveyor belt BHS may be employed, and the number of conveyor belts may be freely configured according to different site conditions. Such conveyor line achieves a high pass rate of the baggage 201 through intelligent queuing logic. The remote image determination system may employs either a pop-up window image determination mode or a remote scrollable image determination mode.

Referring to the descriptions and the embodiments of FIG. 1 to FIG.7, an integrated item inspection system is designed to solve the problem that rewinding the XIS for image splicing affects the success rate of baggage tracking, which mainly involves the following aspects. According to the integrated design of the XIS and the BHS, the conveyor belt of the XIS serves as a part of the BHS, i.e., the start and the stop of the conveyor belt of the XIS are controlled by the BHS. In addition, an intermediate position between two beam surfaces of the XIS is selected as a tracking point, instead of selecting an entry position or an exit position of the XIS as the tracking point, so as to avoid false triggering of the light barrier by the baggage 201 during the XIS rewinding. Also, the tracking point light barrier and the start-stop light barrier on the XIS exit side are separately selected, so as to avoid false triggering of the light barrier by the baggage 201 during the XIS rewinding.

FIG. 8 schematically shows a flowchart of an item tracking method according to an embodiment of the present disclosure. FIG. 9 schematically shows a diagram of logic channels for implementing an item tracking method according to the embodiments of the present disclosure.

Referring to FIG. 3 to FIG. 7, the conveying device 110 and the ray scanning device 120 in the item inspection system 100 are provided with M1 trigger mechanisms in total, and the M1 trigger mechanisms are used as M1 tracking points for tracking the item 200. As shown in FIG. 8, the item tracking method in the embodiments of the present disclosure includes the following operations.

In operation S810, M2 tracking points are allocated to the item 200 to be inspected in the conveying process, the conveying device 110 and the ray scanning device 120 are configured to convey the item 200, M1 and M2 are integers greater than or equal to 1, and M2 is less than or equal to M1.

In operation S820, M2 time windows in which the item 200 respectively arrives the M2 tracking points are allocated to the M2 tracking points, the time window indicating a time period with a specific time length.

In operation S830, if the item 200 reaches a corresponding tracking point within each time window, it is determined that the item 200 is under tracking.

In some embodiments, if the item 200 fails to reach a corresponding tracking point within any of the time windows, the item 200 is conveyed to an unpacking and inspection channel. Therefore, abnormality may be quickly recognized based on whether the item 200 reaches a tracking point within a corresponding time window, and when an abnormal baggage 201 appears, it may be dispatched to the channel for unpacking and inspection.

Exemplarily, each tracking point corresponds to a trigger mechanism, and each trigger mechanism includes a photoelectric through-beam sensor. When a baggage 201 is conveyed to a corresponding tracking point, a corresponding photoelectric through-beam sensor is triggered, and then the photoelectric through-beam sensor sends a trigger signal to the control module or control device 130 of the conveying device 110. In some other embodiments, an encoder may be used to assist in timing. The control module or the control device 130 of the conveying device 110 may send a pulse signal to the encoder, and the encoder starts counting, and when the baggage 201 triggers a next photoelectric through-beam sensor, the convey controller controls the encoder to stop counting, until the item 200 either reaches the next tracking point within the time window or exceeds the time period of the time window.

For example, taking the control device 130 as an example, checking whether the baggage 201 reaches a corresponding tracking point within each time window includes the following steps.

In step 1, the control device 130 stores time windows of the respective tracking points. It may be understood that the time windows of the respective tracking point may be the same or different from each other, which may be determined flexibly according to the distance and the speed. When one tracking point is passed, a time window corresponding to a next tracking point starts to be counted.

In step 2, count values of the encoder corresponding to the time windows of the respective tracking points are stored.

In step 3, for each tracking point, the baggage 201 triggers a photoelectric sensor to send out a photoelectric signal, and the encoder starts counting.

In step 4, the control device 130 obtains an actual count value of the encoder based on a real-time count value and a start count value of the encoder, and compares the actual count value with a preset value; if the actual count value does not exceed the preset value, the verify result is that the baggage 201 is under conveying, and if the actual count value exceeds the preset value, it indicates that the baggage 201 does not reach the corresponding tracking point accurately.

In step 5, when the baggage 201 triggers a photoelectric through-beam sensor of a next tracking point to send out a photoelectric signal, the encoder stops counting for the current time window, and the control device 130 controls the encoder to start counting for a next time window. It may be understood that the above takes the configuration of one encoder as an example, but each tracking point may be provided with a corresponding encoder, which will not be specifically limited in the present disclosure.

In some embodiments, referring to FIG. 9, any trigger mechanism has an associated conveying mechanism on the conveying device 110 or the ray scanning device 120, and for any time window, the followings are further included. When the conveying mechanism associated with the tracking point corresponding to the time window operates in the forward direction, the elapsed time within the time window range is counted forward (i.e., forward conveying of the conveyor belt leads to forward timing); when the conveying mechanism associated with the tracking point corresponding to the time window operates in the reverse direction, the elapsed time within the time window range is counted backward (i.e., reverse conveying of the conveyor belt leads to negative timing); and when the conveying mechanism associated with the tracking point corresponding to the time window stops operating, the elapsed time within the time window range stops being counted (i.e., the conveyor belt stop leads to no timing).

With continued reference to FIG. 9, a logic channel is allocated to each baggage 201, as long as the number of logic channels is greater than the maximum number of baggage 201 that the conveyor system can accommodated, and the logic channels are reusable. Several tracking points, for example, 6 tracking points, are allocated to each logic channel. Once the baggage 201 enters the logic channel, it is marked with a tracking ID (i.e., the first identifier), and the time window for each subsequent tracking point is pre-configured. If the baggage 201 reaches the tracking point within the time window, correction is performed to eliminate the tracking error in this section, and then a next tracking section is started. Before the baggage 201 reaches the sorting port, a corresponding image determination result information is queried in a conclusion data queue, so as to perform a corresponding unpacking and inspection operation or release operation.

For example, when the item 200 reaches the first tracking point, the tracking ID of the item 200 is generated as the tracking starting point. In addition, when the timing is started, the time window for reaching a beam surface tracking point is 5 minutes, with the elapsed time counted forward. If the item 200 reaches the beam surface tracking point within a specified time range, the tracking ID will be sent to the XIS so as to associate the image with the ID. For any tracking point after the tracking start point, in a case of the item 200 reaching the tracking point within a corresponding time window ( a specified time range), the tracking ID will be transferred to a next conveyor belt, otherwise, the current logic channel is closed, the tracking is stopped, and the item 200 is conveyed to the unpacking and inspection channel.

According to the embodiments of the present disclosure, an item tracking method for the item inspection system 100 is provided. By allocating several tracking points to the item 200 to be inspected, and pre-allocating time windows for reaching the respective tracking points, it is possible to achieve a prediction of item tracking, and the item 200 is tracked in real time based on the triggering at the tracking points during the actual conveying process, thereby improving the tracking accuracy of the item 200.

Referring to the above descriptions and the embodiments of FIG. 1 to FIG. 9, the integrated item inspection system 100 is applicable for a system integration solution of a CX100100DB-A-typed X-ray inspection system, an ATR automatic code scanning system, a BHS and a remote image determination system in the application scenario of airport cargo terminal security inspection, which mainly involves the following aspects. For a front section of the security inspection machine, an automatic baggage gapping conveyor belt and a baggage 201 information collection system are added. Regarding renovation of the security inspection machine, by modifying with lightweight lead curtains, the baggage 201 throughput capacity may be improved. Interconnection software is developed to cooperate with the conveyor line to complete the tracking of the baggage 201. For a rear section of the security inspection machine, a conveyor belt, an automatic sorter 113, a returning mechanism and a release mechanism are designed. PLC program is developed to complete the tracking and sorting of the baggage 201 to address the problem of the impact of the security inspection machine rewinding for image splicing on the tracking of the baggage 201. The sorter 113 is developed to address the problem that the conventional tilt-tray sorter 113 has insufficient sorting capability for irregular baggage 201. For the remote image determination system, the remote image determination system may not only provide the function of image distribution and remote image determination, but also integrate the information of the conveyor system with the security inspection machine in the system, which is convenient for the security inspection personnel to monitor the integrated item inspection system 100 of the whole airport cargo terminal.

In some embodiments, the operation process of the item inspection system 100 in the airport cargo terminal security inspection is as follows.

ID verification: Before the security inspection of a single piece of baggage 201, a cargo agent must conduct an ID verification before the commencing shipment; after the verification is completed, the belt of the security inspection machine starts to rotate forward, and belts of the automatic code scanning machine at the entry and the exit of the security inspection machine are linked to rotate forward, and the cargo agent prepares for loading of each baggage 201 affixed with labels.

Parcel gapping at entry BHS: The entry BHS receives the baggage 201 and performs parcel gapping to the baggage 201, so as to ensure an interval between parcels is not less than 500 mm (for illustration only).

Automatic code scanning: After the baggage 201 enters the ATR code scanning region, the ATR scans it, and after the code scanning is completed, the ATR sends the barcode of the baggage 201 to the entry BHS at a fixed position (the XIS entry).

Baggage security inspection: The entry BHS starts to track the baggage 201 at the fixed position, and sends the barcode of the baggage 201 and the tracking BID code (automatically generated by the BHS) to the XIS at the XIS beam surface intermediate position, and the XIS packages and sends the image of the baggage 201, the corresponding barcode and the BID code to the remote image determination system.

Image determination for security inspection: The exit BHS continuously conveys and tracks the baggage 201, and during this process, the remote image determination station performs image determination on the received image information; after an image determination result of the baggage 201 is given by the image recognition personnel, the remote judge system sends the image determination result and the tracking BID code to the XIS, and after the XIS receives them, the XIS sends them to the exit BHS.

Baggage 201 sorting: When the baggage 201 is conveyed to a fixed position upstream of the sorter 113, the exit BHS extracts the result from the data queue based on the received result and the tracking BID code, and sorts or releases the corresponding baggage 201 based on the image determination result.

Unpacking and inspection operation: The unpacking personnel and the cargo agent are required to sequentially perform the unpacking and inspection to the returned suspicious baggage 201, re-declaration of the name of the item and other operations; during the conveying and unpacking of the suspicious baggage 201, other baggage 201 may still pass through the security inspection machine for security inspection.

Baggage Re-inspection: After the unpacking and inspection is completed, the baggage 201 without contraband is required to be re-inspected; the re-inspection process is consistent with the initial inspection; if a suspicious baggage 201 appears in the re-inspection, it needs to be sent back for unpacking and inspection again, and the security inspection process of the whole consignment of the baggage 201 will not end until each piece of baggage 201 is handled.

In the process of baggage inspection, handling of interference factors is shown in Table 1.

**Table 1 Anti-interference indicators**

| Serial number | Interference factors | Handling of interference |
|---|---|---|
| 1 | When one parcel passes through the beam surface, two ID numbers are generated | Unpacking and inspection is performed, and subsequent parcels are not affected |
| 2 | During scanning of a code, a trailing parcel is accidentally sent to the security inspection machine | Unpacking and inspection is performed, and subsequent parcels are not affected |
| 3 | When a parcel passes through a beam surface, no ID number is generated due to parcel missing | Unpacking and inspection is performed, and subsequent parcels are not affected |
| 4 | A parcel is randomly added to the parcel queue | Unpacking and inspection is performed, and subsequent parcels are not affected |
| 5 | A parcel does not trigger a sorting light barrier after sorting | Alarm is tiggered, and the ID number of the parcel is displayed |
| 6 | When a parcel is released, it does not trigger a release light barrier | Alarm is tiggered, and the ID number of the parcel is displayed |

The item inspection system 100 and the item tracking method provided in the embodiments of the present disclosure adopt an integrated design of BHS and XIS, the information interaction points of BHS and XIS are properly select, the system tracking point and the parcel start-stop point are properly designed, and the tracking algorithm is optimized, so that it is possible to improve the system tracking and sorting success rate.

It may be understood by those skilled in the art that the features recited in various embodiments and/or claims of the present disclosure may be in combination and/or in conjunction in various ways, even if such combinations or conjunctions are not explicitly recited in the present disclosure. In particular, the features recited in various embodiments and/or claims of the present disclosure may be in combination and/or in conjunction in various ways without departing from the spirit and teaching of the present disclosure. All these combinations and/or conjunctions are within the scope of the present disclosure.

The embodiments of the present disclosure have been described above. However, these embodiments are only for the purpose of illustration, and are not intended to limit the scope of the present disclosure. Although each embodiment is described separately above, this does not mean that measures in each embodiment may not be used in combination. The scope of the present disclosure is defined by the appended claims and the equivalents thereof. Without departing from the scope of the present disclosure, various substitutions and modifications may be made by those skilled in the art, and these substitutions and modifications should all fall within the scope of the present disclosure.

## Claims

1. An item inspection system, comprising:
a conveying device comprising a first conveying mechanism and a third conveying mechanism both configured to convey an item;
a ray scanning device comprising a second conveying mechanism configured to convey the item from the first conveying mechanism to a ray scanning region and convey the item to the third conveying mechanism; and
a control device communicatively connected with the conveying device and the ray scanning device,
wherein the conveying device, the ray scanning device and the control device adopt a unified communication protocol, and the conveying device is configured to control an operation of the second conveying mechanism through the control device.

2. The item inspection system according to claim 1, further comprising:
an image determination device communicatively connected with at least the ray scanning device and adopting the unified communication protocol,
wherein the image determination device is configured to: acquire a scanned image obtained by scanning the item using the ray scanning device, and obtain an image determination result of the scanned image.

3. The item inspection system according to claim 2, wherein the conveying device is configured to generate a first identifier for the item, and send the first identifier to the ray scanning device in response to the item triggering a second trigger mechanism on the ray scanning device, wherein the second trigger mechanism is arranged between a first ray beam and a second ray beam of the ray scanning device; and
the ray scanning device is configured to send the first identifier and the scanned image of the item to the image determination device.

4. The item inspection system according to claim 3, further comprising:
a recognition device arranged on a path where the first conveying mechanism conveys the item, wherein the recognition device is communicatively connected with at least the conveying device and adopts the unified communication protocol; and
the recognition device is configured to: scan a label of the item passing through a recognition region to generate a second identifier, and send the second identifier to the conveying device, wherein the second identifier is used for recording the item.

5. The item inspection system according to claim 4, wherein the conveying device is configured to send the first identifier and the second identifier of the item to the ray scanning device; and
the ray scanning device is configured to send the first identifier, the second identifier and the scanned image of the item to the image determination device.

6. The item inspection system according to claim 4, wherein the control device is communicatively connected with the recognition device and the image determination device, and the control device is configured to:
receive a state information of each of the conveying device, the ray scanning device and the recognition device, and send the state information to the image determination device for processing, wherein the state information indicates an operating situation of a corresponding device.

7. The item inspection system according to claim 3, wherein the conveying device further comprises a sorter connected with the third conveying mechanism,
the conveying device is configured to obtain the first identifier and the image determination result of the item, and control the sorter to sort the item based on the first identifier and the image determination result of the item.

8. The item inspection system according to claim 7, wherein the conveying device further comprises at least one sorting branch connected with the sorter, the third conveying mechanism is provided with a sixth trigger mechanism, and each sorting branch is provided with a seventh trigger mechanism; and
the control device is configured to verify a sorting result based on a time difference between a time instant when the item triggers the sixth trigger mechanism and a time instant when the item triggers the seventh trigger mechanism of a target sorting branch; and the target sorting branch is determined based on the first identifier of the item and the image determination result.

9. The item inspection system according to claim 8, wherein the control device is configured to control the sorter to stop operating when the time difference exceeds a preset threshold.

10. The item inspection system according to claim 9, wherein the sorting branch is configured to convey an item on the sorting branch to a designated position, and the control device is configured to:
in response to the item trigging a seventh trigger mechanism of a non-target sorting branch, control the non-target sorting branch to stop operating.

11. An item inspection method for the item inspection system according to any one of claims 1 to 10, comprising:
conveying, by a conveying device, an item, wherein the conveying device comprises a first conveying mechanism and a third conveying mechanism configured to convey the item;
conveying, by a second conveying mechanism in a ray scanning device, the item from the first conveying mechanism to a ray scanning region, and then to the third conveying mechanism; and
controlling, by the conveying device through a control device, an operation of the second conveying mechanism, wherein the control device is communicatively connected with the conveying device and the ray scanning device, and the conveying device, the ray scanning device and the control device adopt a unified communication protocol.
